(19) Europäisches Patentamt
European Patent Office
Office européen des brevets

(11) EP 2 627 726 B1

(12) **EUROPEAN PATENT SPECIFICATION**

(45) Date of publication and mention
of the grant of the patent:
**05.02.2020 Bulletin 2020/06**

(51) Int Cl.:
***C09K 8/035*** (2006.01)

(21) Application number: **11721730.7**

(86) International application number:
**PCT/EP2011/057321**

(22) Date of filing: **06.05.2011**

(87) International publication number:
**WO 2011/083182 (14.07.2011 Gazette 2011/28)**

(54) **CLAY INHIBITORS FOR THE DRILLING INDUSTRY**

TONINHIBITOREN FÜR DIE BOHRINDUSTRIE

INHIBITEURS D'ARGILE POUR L'INDUSTRIE DU FORAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2010 IT VA20100076**

(43) Date of publication of application:
**21.08.2013 Bulletin 2013/34**

(73) Proprietor: **Lamberti Spa
21041 Albizzate (VA) (IT)**

(72) Inventors:
• **MERLI, Luigi**
**I-21047 Saronno (VA) (IT)**
• **GIANI, Francesca**
**I-21020 Brebbia (VA) (IT)**
• **PIROVANO, Pierangelo**
**I-21025 Comerio (VA) (IT)**

• **FLORIDI, Giovanni**
**I-28100 Novara (IT)**
• **LI BASSI, Giuseppe**
**I-21026 Gavirate (VA) (IT)**

(74) Representative: **Giaroni, Paola**
**LAMBERTI S.p.A.**
**Ufficio Brevetti**
**Via Piave, 18**
**21041 Albizzate (VA) (IT)**

(56) References cited:
**EP-A1- 2 062 957        WO-A1-2010/131549
US-A1- 2002 155 956      US-A1- 2006 289 164**

• **A. DE ROBERTIS ET AL: "Stability-charge and stability-structure relationships in the binding of tri- and tetracarboxylic ligands by open-chain polyammonium ions", J. CHEM. ENG. DATA, vol. 46, 9 December 2001 (2001-12-09), pages 1365-1370, XP002649890,**

**Description**

FIELD OF THE INVENTION

The present invention relates to a method for inhibiting hydration of clays in drilling operations comprising the use of an aqueous based drilling fluid containing clay hydration inhibitors for the drilling industry, that is to products which are effective for the inhibition of swelling of clays (also called shales) which come into contact with the fluids used in the drilling and construction of oil and gas wells for the petroleum industry.

The clay hydration inhibitors (also called clay inhibitors or hydration inhibitors) of the invention are bis-hexamethylene-triamine and the salts thereof.

BACKGROUND OF THE ART

In the rotary drilling of wells a drilling fluid circulates throughout the underground well to carry the cuttings from the bit and to transport these cuttings to the surface. Contemporaneously, the drilling fluid cools and cleans the drill bit, as well as it reduces the friction between the drill string and the drilled hole, and it also stabilizes the uncased sections of the well. Usually the drilling fluids form a low permeability filter cake in order to seal any permeability associated with the surrounding geological formations.

The drilling fluids may be classified according to their fluid base: oil based fluids which contain solid particles suspended in an oil continuous phase and, possibly, water or brine may be emulsified with the oil. Alternatively, water base fluids contain solid particles suspended in water or brine. Various other components may be added, deliberately or otherwise, to water based drilling fluids: a) organic or inorganic colloids, such as clays, used to impart viscosity and filtration properties; b) soluble salts or insoluble inorganic minerals used to increase the fluid density; c) other optional components may be added to impart desirable properties, such as dispersants, lubricants, corrosion inhibitors, defoamers or surfactants; d) during the drilling operations formation solids may disperse into the drilling fluid.

Formation solids that become dispersed in a drilling fluid include cuttings from drilling and soil and solids from the surrounding unstable formation. When the formation yields solids that are clay minerals which swell, this can potentially compromise drilling time and increase costs. Clays are typically composed of sheets that can have exposed surface hydroxyls. Multivalent atoms may create a negative potential at the clay surface and, in this case, cations can be adsorbed onto the surface. These cations may be exchangeable. Substitutions within the clay structure and the presence of exchangeable cations affect the tendency of the clay to swell in water. For example surface hydration gives swelling with water molecules adsorbed on clay surfaces. All types of clays can swell in this manner.

Another type of swelling is called osmotic swelling, when the interlayer ion concentration leaches water between the clay unit layers, swelling the clay. Only some clays can undergo osmotic swelling. All types of clay swelling can cause a series of problems. This increases drag between the drill string and the sides of the borehole. This can cause the loss of fluid circulation and sticking of the drill string and bit.

This is why the development of effective clay swelling inhibitors is important to the oil and gas exploration industry. The present invention works towards a solution to these difficulties. Many clay inhibitors are known, including the use of inorganic salts such as potassium chloride, which effectively inhibit clay swelling and which are well known to those skilled in the art. Numerous patents have been filed which describe techniques or products which can be used to inhibit clay swelling. Without completely summarizing the patent literature, and by way of example, we can cite the inhibitor compositions based on: a) inorganic phosphates, described in US 4,605,068 (YOUNG et al.) ; b) polyalkoxy diamines and their salts, in US 6,484,821 , US 6,609,578 , US 6,247,543 and US 20030106718 , all by Patel at al.; c) choline derivatives in US 5,908,814 (PATEL et al.); d) oligomethylene diamines and their salts, in US 5,771,971 (HORTON et al.) and US 20020155956 (CHAMBERLAIN et al.). In particular US 5,771,971 describes the use of diamines with a chain length of 8 or less, but does not mention the use of organic triamines. US 2006/289164 discloses a method for the stabilization of clays that uses fluids comprising two or more amine salts; the fluids can comprise alkylpolyamines, e.g. in one example hexamethylenediamine, or triamine to heptamines.

US 2007/0207932 (MERLI et al.) relates to a method for inhibiting hydration of clays in drilling operations comprising the use of an aqueous based drilling fluid containing 1,2-cyclohexanediamine and/or its salts.

Aqueous solution of protonated 6,6'-iminodihexylamine are disclosed by A. De Robertis et al. in J. Chem. Eng. Data, vol. 46 (2001), p. 1365-1370.

US2006289164 discloses a method for the stabilisation of clays in hydrocarbon-bearing subterranean formations that minimises or reverses swelling.

SUMMARY OF THE INVENTION

The invention has been defined in the claims.

In one aspect, the invention is a method for inhibiting the hydration of clays in drilling operations including the use of an aqueous based drilling fluid containing from about 0.2 to about 5 wt% of a hydration inhibitor that comprises bis-hexamethylene-triamine, bis-hexamethylene-triamine salts, or mixtures thereof.

In another aspect, a method for inhibiting the hydration of clays in drilling operations including the use of an aqueous based drilling fluid containing from about 0.02 to about 5 wt% of bis-hexamethylene-triamine, bis-hexamethylene-triamine salts, or mixtures thereof is disclosed.

In another aspect, the disclosure is about a hydration inhibitor comprising at least 10 wt% of bis-hexamethylene-triamine hydrochloride salt.

In still another aspect, the disclosure is about an aqueous based drilling fluid comprising from 0.2 to 5 wt% of a hydration inhibitor comprising at least 10 wt% of bis-hexamethylene-triamine, bis-hexamethylene-triamine salts, or mixtures thereof.

Further, an aqueous based drilling fluid comprising from 0.02 to 5 wt% of bis-hexamethylene-triamine, bis-hexamethylene-triamine salts, or mixtures thereof is disclosed.

BRIEF DESCRIPTION OF THE DRAWINGS

The examples were carried on as described below and are illustrated in the drawings. In the drawings the following abbreviations are used to indicate the clay inhibitor contained in the mud.

KC1 =  potassium chloride from Aldrich Chemicals Co.

BHTb =  hydrochloride salt of high boiling by-product of hexamethylenediamine purification comprising 24.5 wt% of bis-hexamethylene-triamine (Bhtb), prepared by adding 53.4 g HCl 30 wt% and 7 g of water onto 39.5 g of Bhtb (pH about 10)

HMDA =  hydrochloride salt of hexamethylenediamine prepared by adding HCl 30 wt% onto hexamethylenediamine (98% from Aldrich Chemicals Co.) to pH about 10.

BHT=  hydrochloride salt of bis-hexamethylene-triamine, prepared by adding HCl 30 wt% onto bis-hexamethylenetriamine (98% from Aldrich Chemicals Co.) to pH about 10.

BHT+HMDA=  hydrochloride salt of a mixture of bis-hexamethylene-triamine and hexamethylenediamine (respectively 24.5 wt% and 56.3 wt%) in water, prepared by adding HCl 30 wt% onto the mixture of the amines to pH about 10.

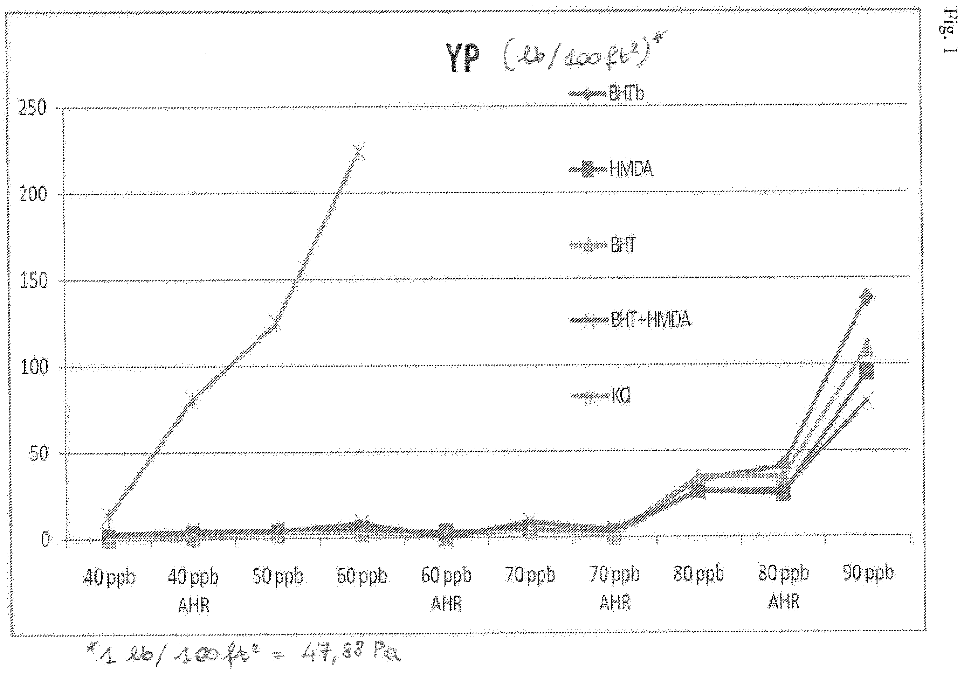

Fig 1. gives the yield point values (YP expressed in lb/100 feet$^2$; 1 lb/100 feet$^2$ corresponds to 47.88 Pa) obtained from the Bentonite Swelling Test. In Fig. 1 AHR means "After Hot Rolling".

DETAILED DESCRIPTION OF THE INVENTION

It has now been found that the bis-hexamethylene-triamine and salts thereof positively affect the stabilizing effect on clay swelling. Bis-hexamethylene-triamine and its salts have revealed to be excellent clay hydration inhibitors for the petroleum industry, being able to effectively inhibit clay swelling in subterranean formations.

It is therefore a fundamental object of the present invention a method for inhibiting the hydration of clays in drilling operations comprising the use of an aqueous based drilling fluid containing from 0.2 to 5 wt%, preferably from 0.5 to 3 wt%, of a hydration inhibitor comprising at least 10 wt% of bis-hexamethylene-triamine, bis-hexamethylene-triamine salts or mixture thereof, which corresponds to a method in which the aqueous based drilling fluid contains from 0.02 to 5 wt%, preferably from 0.05 to 3 wt% of bis-hexamethylene-triamine, bis-hexamethylene-triamine salts or mixture thereof.

According to a preferred aspect the aqueous based drilling fluid from 0.04 to 5 wt% of bis-hexamethylene-triamine, bis-hexamethylene-triamine salts or mixture thereof.

In yet another aspect the present invention is an aqueous based drilling fluid comprising from 0.2 to 5 wt%, preferably from 0.5 to 3 wt%, of a hydration inhibitor comprising at least 10 wt% bis-hexamethylene-triamine, bis-hexamethylene-triamine salts or mixture thereof; according to this aspect, the aqueous based drilling fluid comprises form 0.02 to 5 wt%, preferably from 0.05 to 3 wt% of bis-hexamethylene-triamine, bis-hexamethylene-triamine salts or mixture thereof.

The salts of bis-hexamethylene-triamine useful for the realization of the invention are of the inorganic or of the organic kind, the preferred salts being salts formed with hydrochloric acid, phosphoric acid, formic acid, acetic acid, more preferably with hydrochloric acid.

Preferably all the amine groups of bis-hexamethylene-triamine are salified.

Application tests on the clay inhibitors of the invention and on prior art clay inhibitors were carried out by an aqueous solution using purified bis-hexamethylene-triamine (about 98 wt%) hydrochloride salt.

It has been further observed that, advantageously, the clay inhibitor of the invention can be the hydrochloride salt of a high boiling by-product of hexamethylenediamine purification (product that is commercially known as HMDA bottoms), that typically comprises variable amounts of bis-hexamethylene-triamine and may be described by the CAS No. 68411-90-5.

Hexamethylenediamine is extensively used in the production of nylon 66 and is generally obtained via the hydrogenation of adiponitrile and the subsequest distillation of the reaction products. The distillation of hexamethylenediamine leaves a distillation residue (in this text "high boiling by-product of hexamethylenediamine purification" or "HMDA bottoms") that contains significant amounts of bis-hexamethylene-triamine together with hexamethylenediamine, higher polyamines, water and NaOH.

To date HMDA bottoms have found limited use.

It has now been surprisingly found that HMDA bottoms and their salts can be used as a very efficient clay hydration inhibitors for aqueous based drilling fluids.

Bis-hexamethylene-triamine has proved to be by itself a very efficient hydration inhibitor, showing performances that are close to those of hexamethylenediamine; moreover, the compounds that are contained in HMDA bottoms along with hexamethylenediamine and bishexamethylenetriamine do not adversely affect the effectiveness of the product.

The suitable, typical composition of HMDA bottoms is the following (wt%):

| | |
|---|---|
| Bis-hexamethylene-triamine | 20-50 |
| Hexamethylendiamine | 20-70 |
| 1,2-Cyclohexanediamine | 0-30 |
| NaOH | 0-10 |
| Water | 10-30 |
| Higher polyamines | 0-20 |

According to an advantageous embodiment of the invention the hydration inhibitor of the invention is an aqueous solution that comprises at least 10 wt% of bis-hexamethylene-triamine hydrochloride salt and, the hydration inhibitor is an aqueous solution comprising from 40 to 60 wt% of water and the hydrochloride salt of a high boiling point by-product of hexamethylenediamine purification as defined above. It has been found that the above liquid hydration inhibitor is stable at ambient temperature and even at -18°C / + 50°C, which is particularly advantageous for its transport, storage and use.

The hydration inhibitor of the disclosure may even comprise less than 10% wt% of bis-hexamethylene-triamine hydrochloride salt, but advantageously at least 5 wt%, provided that the inhibitor is dosed in the aqueous based drilling fluid in such an amount that the content of bis-hexamethylene-triamine hydrochloride salt in the fluid is from 0.02 to 5 wt%.

The aqueous based drilling mud contains an aqueous based continuous phase and the normally used additives, well known by those skilled in the art, such as weighting materials, viscosifying agents, dispersants, lubricants, corrosion inhibitors, defoamers and surfactants; the order in which the additives and the clay inhibitors of the invention are added into the mud is not critical. Useful weighting materials may be selected from: barite, hematite, iron oxide, calcium carbonate, magnesium carbonate, magnesium organic and inorganic salts, calcium chloride, calcium bromide, magnesium chloride, zinc halides, alkali metal formates, alkali metal nitrates and combinations thereof.

The aqueous based continuous phase may be selected from: fresh water, sea water, brine, mixtures of water and water soluble organic compounds and mixtures thereof.

EXAMPLES

The application tests were conducted to determine the ability of bis-hexamethylenediamine (and of its mixtures) to inhibit the swelling of a bentonite clay in an aqueous fluid, and to compare its bentonite swelling inhibition capability with that of hexamethylenediamine and potassium chloride, which are well known clay inhibitors.

The methods used in the application test are the following:

BENTONITE SWELLING TEST

350 g of tap water and 8 g (8 ppb, 1 ppb= 2.853 kg/m$^3$) of clay inhibitor are added to a clean glass jar; and 40 g (40 ppb) of bentonite are added and the mixture (mud) is shaken with an Hamilton Beach Shaker for 30 minutes. All samples were adjusted to at pH of 9. The mixture is rolled at 150°F (65.56°C) for 16 hours, then its rheology is measured with a Fann 35A Viscometer. The procedure is carried out again, each time with further addition of 10 g of bentonite, until the mud becomes too viscous to measure.

RECOVERY TEST

A sample of dried shale is ground and sieved through both a 4 mm sieve and a 2 mm sieve. Ground shale particles which passed through the 4 mm sieve but collected on the 2 mm sieve, e.g., shale particles that are sized less than 4 mm but greater than 2 mm, are selected for use in this particular test. For each fluid to be tested, a 100 grams sample of sized shale is weighed and selected.

8g of shale inhibitor are added to 350 ml of synthetic sea water and, then, the fluid is mixed with an Hamilton Beach shaker for 15 minutes. All samples are adjusted to at pH of 9.

100g of sized shale sample are added to the fluid in a bottle. The bottle is capped and shaken to disperse the shale particles of the sample. The bottle is placed in a pre-heated oven and hot rolled at 150°F for 16 hours. When the 16 hours hot roll is complete, the sample is cooled to room temperature.

The contents of the sample bottle are then poured onto a 10 mesh (2 mm) sieve. The inside of the sample bottle is carefully rinsed with the fluid collected after screening out the 2 mm shale fraction. The bottle is repeatedly rinsed and poured until all shale is removed from the bottle. The sample is then placed in a pre-weighed dish and transferred to a pre-heated oven at 250°F to dry to a constant weight. After drying, the shale sample is then weighed. The percentage recovery of shale for each fluid tested is then determined by the following calculation:

$$\text{Percent recovered} = (\text{weight in grams of dried shale recovered})/(100 - w_h) \times 100$$

where $w_h$ is the initial moisture content of the sized shale. The initial moisture content of the sized shale is determined drying a pre-weighed shale sample in a pre-heated oven at 250°F to a constant weight. The sample is then weighed.

The percentage of initial moisture content is calculated as follows:

$$w_h = (\text{Weight in grams of dried shale})/(\text{initial weight of shale used}) \times 100$$

The higher the percent recovered the higher the hydration inhibition performance of the tested product.

The following clay inhibitors were tested:

KCl = potassium chloride from Aldrich Chemicals Co.

BHTb = hydrochloride salt of high boiling by-product of hexamethylenediamine purification comprising 24.5 wt% of bis-hexamethylene-triamine (Bhtb), prepared by adding 53.4 g HCl 30 wt% and 7 g of water onto 39.5 g of Bhtb (pH about 10)

HMDA = hydrochloride salt of hexamethylenediamine prepared by adding HCl 30 wt% onto hexamethylenediamine (98% from Aldrich Chemicals Co.) to pH about 10.

BHT = hydrochloride salt of bis-hexamethylene-triamine, prepared by adding HCl 30 wt% onto bis-hexamethylene-triamine (98% from Aldrich Chemicals Co.) to pH about 10.

BHT+HMDA= hydrochloride salt of a mixture of bis-hexamethylene-triamine and hexamethylenediamine (respectively 24.5 wt% and 56.3 wt%) in water, prepared by adding HCl 30 wt% onto the mixture of the amines to pH about 10.

The result of the Recovery Test in reported in Table 1.

Table 1

| Hydration inhibitor | % of clay recovery |
|---|---|
| BHT b | 41 |
| BHT | 43 |
| HMDA | 31 |
| KCl | 6 |

(continued)

| Hydration inhibitor | % of clay recovery |
|---|---|
| BHT+HMDA | 41 |

The results of the Bentonite Swelling Test are reported in Fig. 1.

The results show that bis-hexamethylene-triamine is itself a very effective hydration inhibitor and that, conveniently, HMDA bottoms can be used as an efficient clay inhibitor being a convenient and suitable source of bis-hexamethylene-triamine.

The comparison between the samples BHT+HMDA and BHTb shows that the additional material contained in the HMDA bottom do not alter the performance of the two main active ingredients (hexamethylenediamine and bis-hexamethylene-triamine).

While the compositions and methods of this invention have been described in the terms of the preferred embodiments, it will be apparent to those of skill in the art that variations may be applied to the process described herein without departing from the concept and scope of the invention. All such similar substitutes and modifications apparent to those skilled in the art are deemed to be within the scope and concept of the invention as it is set out in the following claims.

## Claims

1. A method for inhibiting the hydration of clays in drilling operations comprising the use of an aqueous based drilling fluid containing from 0.02 to 5 wt% of bis-hexamethylene-triamine, bis-hexamethylene-triamine salts, or mixtures thereof as hydration inhibitor.

2. The method of claim 1. wherein the aqueous based drilling fluid comprises from 0.04 to 5 wt% of bis-hexamethylene-triamine, bis-hexamethylene-triamine salts, or mixtures thereof.

3. The method of claim 2. wherein the aqueous based drilling fluid comprises from 0.04 to 5 wt% of bis-hexamethylene-triamine hydrochloride salt.

4. The method of claim 3. wherein the bis-hexamethylene-triamine hydrochloride salt is added as the hydrochloride salt of a high boiling by-product of hexamethylenediamine purification that comprises bis-hexamethylene-triamine, the high boiling by-product being described by CAS No. 68411-90-5.

5. The method of claim 1. wherein the aqueous based drilling fluid comprises from 0.05 to 3% wt% of bis-hexamethylene-triamine, bis-hexamethylene-triamine salts, or mixtures thereof as hydration inhibitor.

6. The method of claim 1 wherein the aqueous based drilling fluid additionally comprises at least one material selected from the group consisting of weighting materials, viscosifying agents, dispersants, lubricants, corrosion inhibitors, defoamers and surfactants and mixtures thereof.

7. The method of claim 6. wherein the weighting materials are selected from the group consisting of: barite, hematite, iron oxide, calcium carbonate, magnesium carbonate, magnesium organic and inorganic salts, calcium chloride, calcium bromide, magnesium chloride, zinc halides, alkali metal formates, alkali metal nitrates and combinations thereof, and the aqueous continuous phase is selected from fresh water, sea water, brine, mixtures of water and water soluble organic compounds, and mixtures thereof.

8. A hydration inhibitor comprising at least 10 wt% of bis-hexamethylene-triamine hydrochloride salt, from 40 to 60 wt% of water and the hydrochloride salt of a high boiling by-product of hexamethylenediamine purification that comprises bis-hexamethylene-triamine, the high boiling by-product being described by CAS No. 68411-90-5.

9. An aqueous based drilling fluid containing from 0.02 to 5 wt% of a hydration inhibitor that comprises bis-hexamethylene-triamine, bis-hexamethylene-triamine salts, or mixtures thereof, a weighting material selected from the group consisting of barite, hematite, iron oxide, calcium carbonate, magnesium carbonate, magnesium organic and inorganic salts, calcium chloride, calcium bromide, magnesium chloride, zinc halides, alkali metal formates, alkali metal nitrates and combinations thereof, and the aqueous continuous phase is selected from fresh water, sea water, brine, mixtures of water and water soluble organic compounds, and mixtures thereof.

## Patentansprüche

1. Verfahren zur Hemmung der Hydratation von Ton bei Bohrvorgängen, umfassend die Verwendung eines wasserbasierten Bohrfluids, das 0,02 bis 5 Gew.-% Bis-hexamethylen-triamin, Bis-hexamethylen-triaminsalze oder Mischungen davon als Hydratationsinhibitor enthält.

2. Verfahren nach Anspruch 1, wobei das wasserbasierte Bohrfluid 0,04 bis 5 Gew.-% Bis-hexamethylen-triamin, Bis-hexamethylen-triaminsalze oder Mischungen davon umfasst.

3. Verfahren nach Anspruch 2, wobei das wasserbasierte Bohrfluid 0,04 bis 5 Gew.-% Bis-hexamethylen-triamin-Hydrochloridsalz umfasst.

4. Verfahren nach Anspruch 3, wobei das Bis-hexamethylen-triamin-Hydrochloridsalz als Hydrochloridsalz eines hochsiedenden Nebenprodukts der Reinigung von Hexamethylendiamin zugegeben wird, das Bis-hexamethylen-triamin umfasst, wobei das hochsiedende Nebenprodukt durch CAS-Nr. 68411-90-5 beschrieben wird.

5. Verfahren nach Anspruch 1, wobei das wasserbasierte Bohrfluid 0,05 bis 3 Gew.-% Bis-hexamethylen-triamin, Bis-hexamethylen-triaminsalze oder Mischungen davon als Hydratationsinhibitor umfasst.

6. Verfahren nach Anspruch 1, wobei das wasserbasierte Bohrfluid zusätzlich mindestens ein Material umfasst, das aus der Gruppe bestehend aus Beschwerungsmaterialien, viskositätssteigernden Mitteln, Dispersionsmitteln, Schmiermitteln, Korrosionsinhibitoren, Entschäumern und Tensiden sowie Mischungen davon ausgewählt ist.

7. Verfahren nach Anspruch 6, wobei die Beschwerungsmaterialien ausgewählt sind aus der Gruppe bestehend aus Baryt, Hämatit, Eisenoxid, Calciumcarbonat, Magnesiumcarbonat, organischen und anorganischen Magnesiumsalzen, Calciumchlorid, Calciumbromid, Magnesiumchlorid, Zinkhalogeniden, Alkalimetallformiaten, Alkalimetallnitraten und Kombinationen davon, und wobei die wässrige kontinuierliche Phase ausgewählt ist aus Süßwasser, Meerwasser, Sole, Mischungen von Wasser und wasserlöslichen organischen Verbindungen und Mischungen davon.

8. Hydratationsinhibitor, umfassend mindestens 10 Gew.-% Bis-hexamethylen-triamin-Hydrochloridsalz, 40 bis 60 Gew.-% Wasser und das Hydrochloridsalz eines hochsiedenden Nebenprodukts der Reinigung von Hexamethylendiamin, das Bis-hexamethylen-triamin umfasst, wobei das hochsiedende Nebenprodukt durch CAS-Nr. 68411-90-5 beschrieben ist.

9. Wasserbasiertes Bohrfluid, das 0,02 bis 5 Gew.-% eines Hydratationsinhibitors enthält, umfassend Bis-hexamethylen-triamin, Bis-hexamethylen-triaminsalze oder Mischungen davon, ein Beschwerungsmaterial ausgewählt aus der Gruppe bestehend aus Baryt, Hämatit, Eisenoxid, Calciumcarbonat, Magnesiumcarbonat, organischen und anorganischen Magnesiumsalzen, Calciumchlorid, Calciumbromid, Magnesiumchlorid, Zinkhalogeniden, Alkalimetallformiaten, Alkalimetallnitraten und Kombinationen davon, und die wässrige kontinuierliche Phase ist ausgewählt aus Süßwasser, Meerwasser, Sole, Mischungen von Wasser und wasserlöslichen organischen Verbindungen sowie Mischungen davon.

## Revendications

1. Procédé destiné à inhiber l'hydratation d'argiles dans des opérations de forage, comprenant l'utilisation d'un fluide de forage à base aqueuse contenant de 0,02 à 5 % en poids de bis-hexaméthylène-triamine, de sels de bis-hexaméthylène-triamine ou de leurs mélanges comme inhibiteur d'hydratation.

2. Procédé selon la revendication 1, dans lequel le fluide de forage à base aqueuse comprend de 0,04 à 5 % en poids de bis-hexaméthylène-triamine, de sels de bis-hexaméthylène-triamine ou de leurs mélanges.

3. Procédé selon la revendication 2, dans lequel le fluide de forage à base aqueuse comprend de 0,04 à 5 % en poids de sel de chlorhydrate de bis-hexaméthylène-triamine.

4. Procédé selon la revendication 3, dans lequel le sel de chlorhydrate de bis-hexaméthylène-triamine est ajouté en tant que sel de chlorhydrate d'un sous-produit à point d'ébullition élevé de purification d'hexaméthylènediamine qui comprend la bis-hexaméthylène-triamine, le sous-produit à point d'ébullition élevé étant décrit par le N° CAS 68411-90-5.

5. Procédé selon la revendication 1, dans lequel le fluide de forage à base aqueuse comprend de 0,05 à 3% en poids de bis-hexaméthylène-triamine, de sels de bis-hexaméthylène-triamine ou de leurs mélanges comme inhibiteur d'hydratation.

6. Procédé selon la revendication 1, dans lequel le fluide de forage à base aqueuse comprend en outre au moins un matériau choisi dans le groupe constitué par les matériaux de poids, les agents viscosifiants, les dispersants, les lubrifiants, les inhibiteurs de corrosion, les agents antimousse et les agents tensioactifs et leurs mélanges.

7. Procédé selon la revendication 6, dans lequel les matériaux de poids sont choisis dans le groupe constitué de : barytine, hématite, oxyde de fer, carbonate de calcium, carbonate de magnésium, sels organiques et inorganiques de magnésium, chlorure de calcium, bromure de calcium, chlorure de magnésium, halogénures de zinc, formates de métaux alcalins, nitrates de métaux alcalins et leurs combinaisons, et la phase aqueuse continue est choisie parmi l'eau douce, l'eau de mer, l'eau salée, des mélanges d'eaux et composés organiques hydrosolubles, et leurs mélanges.

8. Inhibiteur d'hydratation comprenant au moins 10 % en poids de sel de chlorhydrate de bis-hexaméthylène-triamine, de 40 à 60 % en poids d'eau et le sel de chlorhydrate d'un sous-produit à point d'ébullition élevé de purification d'hexaméthylènediamine qui comprend la bis-hexaméthylène-triamine, le sous-produit à point d'ébullition élevé étant décrit par le N° CAS 68411-90-5.

9. Fluide de forage à base aqueuse contenant de 0,02 à 5 % en poids d'un inhibiteur d'hydratation qui comprend de la bis-hexaméthylène-triamine, des sels de bis-hexaméthylène-triamine ou de leurs mélanges, un matériau de poids choisi dans le groupe constitué par la barytine, l'hématite, l'oxyde de fer, le carbonate de calcium, le carbonate de magnésium et les sels organiques et inorganiques de magnésium, le chlorure de calcium, le bromure de calcium, le chlorure de magnésium, l'halogénures de zinc, les formiates de métaux alcalins, les nitrates de métaux alcalins et leurs combinaisons, et la phase aqueuse continue est choisie parmi l'eau douce, l'eau de mer, l'eau salée, les mélanges d'eaux et composés organiques hydrosolubles et leurs mélanges.

Fig. 1

EP 2 627 726 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4605068 A, YOUNG
- US 6484821 B
- US 6609578 B
- US 6247543 B
- US 20030106718 A
- US 5908814 A, PATEL
- US 5771971 A, HORTON
- US 20020155956 A, CHAMBERLAIN
- US 2006289164 A
- US 20070207932 A, MERLI

### Non-patent literature cited in the description

- **A. DE ROBERTIS et al.** *J. Chem. Eng. Data,* 2001, vol. 46, 1365-1370
- *CHEMICAL ABSTRACTS,* 68411-90-5